Europäisches Patentamt

European Patent Office

Office européen des brevets

(19)

(11) Publication number: **0 106 538**
**A1**

(12) **EUROPEAN PATENT APPLICATION**

(21) Application number: **83305385.3**

(22) Date of filing: **14.09.83**

(51) Int. Cl.³: **G 02 B 5/28**

(30) Priority: **14.09.82 JP 138443/82**

(43) Date of publication of application:
**25.04.84 Bulletin 84/17**

(84) Designated Contracting States:
**DE FR GB**

(71) Applicant: **HOYA CORPORATION**
**13-12, 1-chome, Nishi-shinjuku**
**Shinjuku-ku Tokyo(JP)**

(72) Inventor: **Chikano, Mitsuo**
**1143-11, Fussa**
**Fussa-shi Tokyo(JP)**

(72) Inventor: **Nakajima, Yuji**
**5-32-24, Kuganuma**
**Suginami-ku Tokyo(JP)**

(74) Representative: **Prutton, Roger et al,**
**Marks & Clerk Alpha Tower Suffolk Street Queensway**
**Birmingham B1 1TT(GB)**

(54) **Camera filter.**

(57) A filter for a camera, comprises an ultraviolet ray absorbing filter member including a substrate (1) and an evaporation film (2) which transmits the blue light as well as the green light and sharply cuts one portion of the red light from 640 nm to 700 nm in the range of a wavelength showing a transmission factor of 50%. The evaporation film is formed on one surface of the substrate and the filter is fitted to a frame (4) which is attachable to or detachable from said camera.

FIG. 1

EP 0 106 538 A1

# CAMERA FILTER

The present invention relates to a filter for a camera which absorbs an ultraviolet portion of the spectrum and which cuts a red portion thereof.

A filter which absorbs ultraviolet rays has conventionally been used in order to prevent blue fogging due to the ultraviolet rays. In addition, there have been known a contrasting red transmitting filter and a color compensating cyanic filter as filters for cutting the red portion of the spectrum.

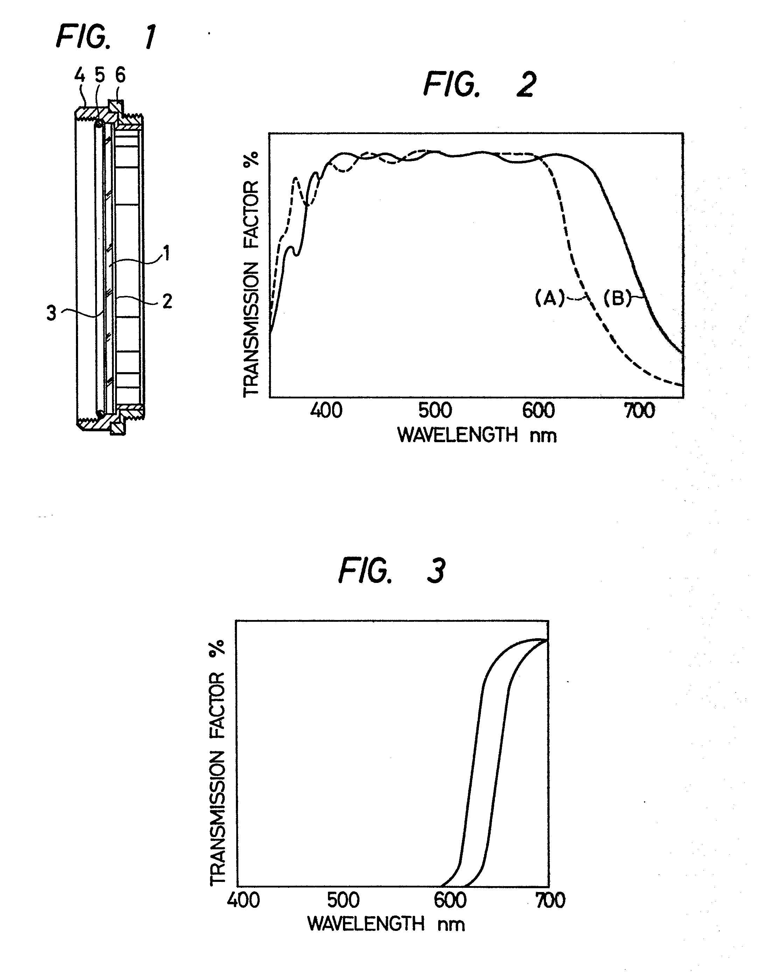

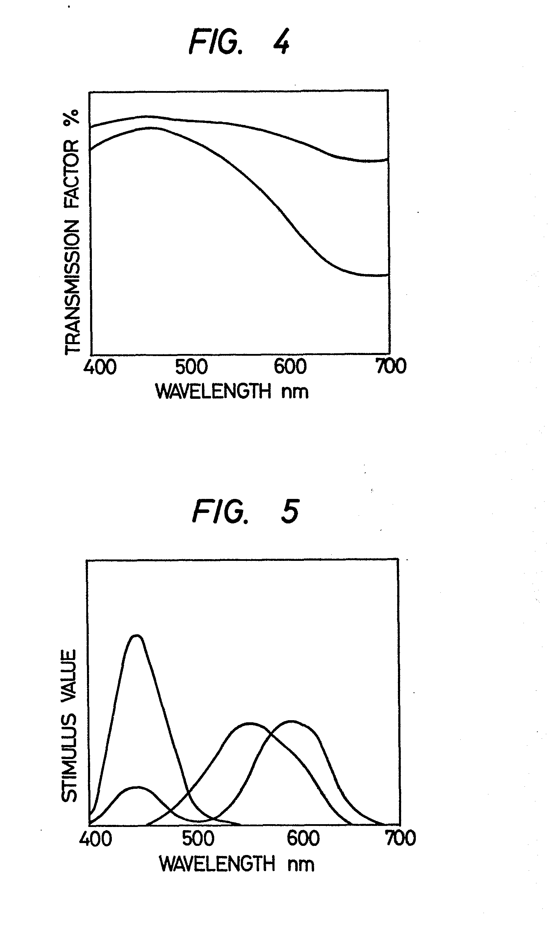

The red transmitting filter is formed of a colored glass or a dyed plastic or gelatine. This filter absorbs a range of a wavelengths which are short in comparison with red light and transmits a range of wavelengths which are long in comparison with red light as shown in the spectral transmission curves of Figure 3, mainly in order to bring about a contrasting effect with black and white film. The cyanic filter transmits a range of wavelengths which are short in comparison with red light and varies the degree of transmission in the red light portion, as shown in Figure 4, mainly in order to vary the color balance of a picture which has been photographed with a color film, or in order to compensate for an insufficiency in the spectral characteristic of a light source, using a dyed gelatine. However, there was a drawback in that it is impossible to obtain the effects described below with the above described filter.

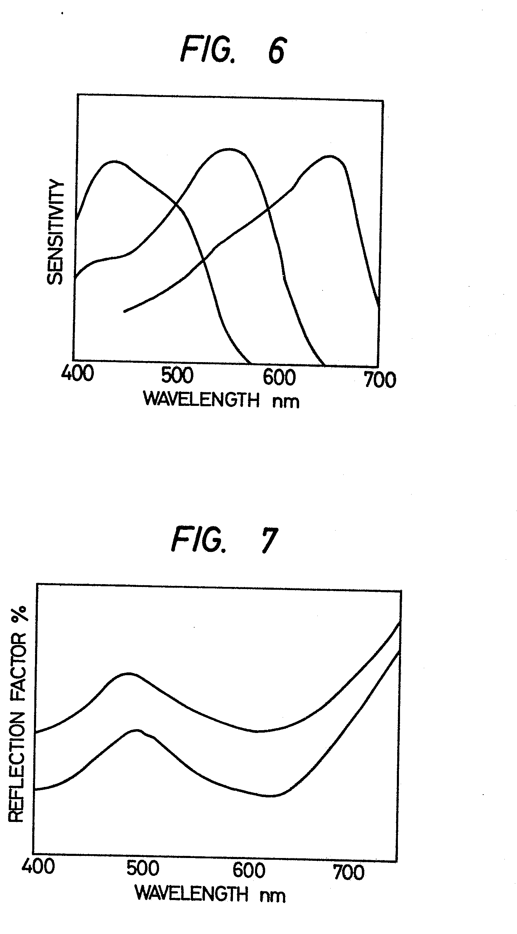

That is, some organic dyes which are used very frequently at present in various kinds of fabrics strongly reflect red light or infrared rays of the maximum wavelength, which are hardly sensed by human eyes. The spectral composition of a color stimulus in color theory when something is seen by human eyes becomes as shown in Figure 5, if it is indicated with the three spectral stimulus values of the CIE (Committee of International Illumination). In addition, color film has spectral curves as shown in Figure 6. Therefore, the color film senses the strong reflected red or infrared light. In particular, the influence is outstanding in green or dark green fabric (for example, in dyed cloth with the spectral reflection factor curves shown in Figure 7), so that this color is reproduced in such a way as to be inclined toward a grey color or a warm color, which is a drawback. In order to prevent this phenomenon, there has been adopted, at present, a method of modification using a masking technique at the time of retouching or printing. However, this is difficult to do, requires lots of time and the cost is high. As will be clearly understood from the drawings mentioned above, if cloth which strongly reflects red light which is hardly sensed by the eyes of a human is photographed with color film, the color film senses it more strongly than human eyes so that cloth, which is sensed as being green by the eye is photographed in such a way as to be inclined toward a grey color or a warm color.

The present invention has been achieved in a manner such that the conventional characteristic feature of absorbing ultraviolet rays as mentioned above is utilized, and such that the conventional drawback in that the color reproduction of the organic dyes is not good is removed.

An object of the present invention is to provide a camera filter, in accordance with which blue fogging due to ultraviolet rays is prevented with an ultraviolet ray absorbing filter as a substrate and which cuts one portion of the red light by forming an evaporated film which absorbs ultraviolet rays which are not preferable in reproducing the color of a color film to render the photographic color reproduction of green or dark green is made excellent.

In the accompanying drawings

Figure 1 is a cross sectional view showing a

-4-

filter in accordance with the present invention;

Figure 2 shows spectral transmission factor curves of the filter of Figure 1;

Figures 3 and 4 show spectral transmission factor curves of a red transmission filter and a cyanic filter;

Figure 5 shows the lines of spectral stimulus values;

Figure 6 shows the spectral sensitivity curves of a typical color film; and

Figure 7 shows the spectral reflection factor curves of green cloth.

An embodiment in accordance with the present invention will hereinafter be explained with reference to the accompanying drawings.

Figure 1 is a cross sectional view showing a filter in accordance with the present invention. There is formed an evaporated film 2 on one surface of an optical glass, plate glass or plastic substrate 1. A reflection preventing film 3 may be formed on the other surface thereof. The composite structure is fitted into a frame body composed of a front frame 4, a rear frame 6 and a ring 5, so as to be mounted to or detached from a camera lens.

The above described composite filter transmits blue light and green light and cuts one portion of the red light as shown in Figure 2. If this filter is provided in front of a camera lens, the strongly reflected red light due to the presence of the aforementioned organic dyes is removed, so that the color film is not exposed to light which is not necessary. Since the spectral sensitivity distribution becomes different depending upon the type of color film, and the spectral reflection factor curve also becomes different depending upon the kind of organic dye, the spectral transmission factor curve of the filter which cuts the red light portion may also be made different to account for the difference in the combination of the above mentioned spectral sensitivity distribution and spectral reflection factor curve. That is, curve (A) in Figure 2 shows the spectral transmission factor curve of the filter which cuts rays having wavelength shorter than that of rays having a transmission factor of 50% at 640 nm. The red light is excessively cut in a filter which cuts rays having the wavelength shorter than 640 nm, so that the color balance is not maintained. Therefore, the spectral transmission factor curve (A) is that of a filter which reaches the limit at the short wavelength side. On the other hand, the solid line (B) in Figure 2 shows the spectral trnasmission factor curve of a filter which cuts rays having wavelength longer than that of rays having a transmission factor of 50% at 700 nm. It is possible to remove the reflected red light by a filter which cuts the wavelength longer than 700 nm, but it is impossible to obtain an inherent effect as the filter so that the spectral transmission curve (B) is that of a filter which reaches a limit at the long wavelength side.

It is impossible for a glass filter, plastic filter or a gelatine filter to obtain a desired spectral transmission factor curve within such a range. It is thus required that an ultraviolet ray absorbing filter be made the substrate, and that there be formed a multi-layer evaporated film on one surface of the substrate in accordance with a vacuum evaporation method. In the embodiment shown, there is formed an evaporated film on one surface of the substrate and a reflection preventing film 3 of a single or multi-layer construction on the other surface of the substrate in accordance with the vacuum evaporation method. The film 3 makes it possible to prevent the ghost or flare by photographing.

In accordance with the present invention as described above, there is formed an evaporated film on one surface of an ultraviolet ray absorbing filter, so that ultraviolet rays may be absorbed to prevent blue

-7-

fogging due thereto. Blue light and green light are transmitted, and one portion of the red light is cut out so as to remove reflected red portions due to the presence of organic dyes, to improve color reproduction in the color photography.

CLAIMS:

1.    A filter for a camera comprising an ultraviolet ray absorbing filter member including a substrate, an evaporation film which transmits the blue light as well as the green light and sharply cuts one portion of the red light from 640 nm to 700 nm in the range of a wavelength showing a transmission factor of 50%, said evaporation film being formed on one surface of the substrate, said substrate being fitted to a frame which is attachable to or detachable from said camera.

2.    The filter of Claim 1, further comprising a reflection preventing layer on the other surface of said substrate for preventing undesired reflection of rays at the other surface of said substrate.

3.    The filter of Claim 2, wherein said frame is comprised of a front frame member, a rear frame member and a ring member for retaining said filter between said front and rear frame members.

## FIG. 1

## FIG. 2

## FIG. 3

## FIG. 4

## FIG. 5

## FIG. 6

SENSITIVITY

400  500  600  700
WAVELENGTH nm

## FIG. 7

REFLECTION FACTOR %

400  500  600  700
WAVELENGTH nm

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 325 608  (CANON K.K.) <br> * Column 1, line 64 - column 2, line 37 * | 1,2 | G 02 B   5/28 |
| Y | GB-A-2 054 195  (AGA AB) <br> * Page 1, lines 53-81 * | 1,2 | |
| Y | Patent Abstracts of Japan vol. 5, no. 88, 9 June 1981 & JP-A-56-33630 | 3 | |
| Y | Patent Abstracts of Japan vol. 6, no. 8, 19 January 1982 & JP-A-56-135830 | 3 | |
| A | US-A-3 630 809  (MONSANTO CO.) <br> * Column 3, line 58 - column 4, line 19 * | 1,2 | TECHNICAL FIELDS SEARCHED (Int. Cl. ³) <br><br> G 02 B   5/00 <br> G 03 B   11/00 |

The present search report has been drawn up for all claims

| Place of search <br> BERLIN | Date of completion of the search <br> 29-11-1983 | Examiner <br> BOTTERILL K.J. |
|---|---|---|